# EUROPÄISCHE PATENTANMELDUNG

(11) **EP 1 170 676 A1**
(43) Veröffentlichungstag der Anmeldung: **09.01.2002**
(21) Anmeldenummer: 00810588.4
(22) Anmeldetag: 05.07.2000
(51) Int. Cl.: G06F 17/30

(54) **Darstellung einer Informationsstruktur von Dokumenten des Word Wide Web**

(71) Anmelder: ABB RESEARCH LTD., 8050 Zürich (CH)
(72) Erfinder: FABRI, Andreas, Dr., 8002 Zürich (CH); GELLE, Esther, Dr., 8965 Berikon (CH)
(74) Vertreter: ABB Patent Attorneys

(57) **Zusammenfassung**

Ein Verfahren, ein Computerprogramm und ein Computerprogrammprodukt ermöglichen eine visuelle Darstellung einer Informationsstruktur von Dokumenten des World Wide Web.

Im erfindungsgemässen Verfahren zur visuellen Darstellung einer Informationsstruktur von mehreren Dokumenten wird ein Graph mit Knoten (11) und Kanten (12) verwendet. Dabei wird ausgenützt, dass die Dokumente auf verschiedenen Hostrechnern respektive in unterschiedlichen Domänen des World Wide Web gespeichert sind, und es wird erfindungsgemäss eine Domäne und/oder ein Hostrechner als Knoten (11) des Graphen dargestellt und jedes Dokument jeweils einem Knoten (11) zugordnet. Eine Gruppe von Referenzen, welche Dokumente zweier Knoten (11) untereinander verbinden, wird als Kante zwischen diesen beiden Knoten (11) dargestellt. Da ein Hostrechner respektive eine Domäne üblicherweise einer Firma oder Institution zugeordnet ist, repräsentieren die Kanten (12) Beziehungen zwischen diesen Organisationen. Die Darstellung basiert auf Informationen welche durch systematische Suche aus dem World Wide Web ermittelt werden und interaktiv durch einen Benutzer bearbeitet werden, um eine Übersicht über Beziehungen zwischen Organisationen, beispielsweise für eine Konkurrenzanalyse zu gewinnen.

## Beschreibung

### Technisches Gebiet

Die Erfindung bezieht sich auf das Gebiet der automatischen Informations-gewinnung. Sie bezieht sich auf ein Verfahren und ein Computerprogramm zur Darstellung einer Informationsstruktur von Dokumenten des World Wide Web gemäss dem Oberbegriff der Patentansprüche 1 und 13.

### Stand der Technik

Durch das Internet und im darauf aufbauenden World Wide Web, wird eine Unmenge von Daten verfügbar gemacht. Die grosse Menge von Daten hat zu einer Entwicklung von Suchverfahren geführt, welche Dokumente des World Wide Web ermitteln, deren Inhalt vorgegebenen Kriterien entspricht. Für bestimmte Arten der Informationsbeschaffung sind aber nicht nur Inhalte von Dokumenten von Bedeutung, sondern auch inhaltliche Verbindungen oder Referenzen zwischen den Dokumenten. Für eine Analyse von Beziehungen zwischen Firmen und Institutionen, beispielsweise im Rahmen einer Konkurrenzanalyse, stellt sich die Aufgabe, diese Beziehungen anhand von Informationen zu ermitteln, welche über einzelne Dokumente der betrachteten Firmen verteilt vorliegen. Beispielsweise findet sich in einer Website einer Firma X der Hinweis, dass die Firma X an einem Forschungsprojekt zu einem Thema Y beteiligt ist, Auf einer Webseite der Forschungsprojekt ist ersichtlich, dass auch Firmen V und W sowie Universität Z beteiligt sind. Aus einer Information eines Nachrichtendienstes Reuters ist bekannt, dass X und Z einen Zusammenarbeitsvertrag unterschrieben haben.

Es bestehen keine geeigneten Softwarewerkzeuge zur Ermittlung und Darstellung respektive Visualisierung solcher Informationen, welche einer Informationsstruktur von Dokumenten des World Wide Web entsprechen und Beziehungen zwischen Körperschaften abbilden. Mit Körperschaften sind im Folgenden Firmen und Institutionen, aber auch Einzelpersonen gemeint, welche insbesondere wirtschaftliche und/oder wissenschaftliche Informationen auf dem World Wide Web anbieten.

Es exisitieren Softwarewerkzeuge, welche Referenzen zwischen Dokumenten, dargestellt durch URLs (Uniform Resource Locator), analysieren und daraus eine Bedeutung einzelner Dokumente zu bestimmen versuchen. Beispielsweise werden häufig zitierte Dokumente als relevant betrachtet. Dokumente werden dabei als Knoten eines Graphen, Referenzen als Kanten des Graphen visuell dargestellt. Diese Verfahren analysieren jedoch nicht die Bedeutung der Dokumente und der Referenzen. Somit sind sie auch nicht für eine Analyse von Beziehungen zwischen Körperschaften geeignet.

### Darstellung der Erfindung

Es ist deshalb Aufgabe der Erfindung, ein Verfahren und ein Computerprogramm zur Darstellung einer Informationsstruktur von Dokumenten des World Wide Web der eingangs genannten Art zu schaffen, welche eine Analyse von Beziehungen zwischen Körperschaften erlaubt.

Diese Aufgabe lösen ein Verfahren, ein Computerprogramm und ein Computerprogrammprodukt zur Darstellung einer Informationsstruktur von Dokumenten des World Wide Web mit den Merkmalen der Patentansprüche 1, 13 beziehungsweise 14.

Im erfindungsgemässen Verfahren zur visuellen Darstellung einer Informationsstruktur von mehreren Dokumenten wird ebenfalls ein Graph mit Knoten und Kanten verwendet. Dabei wird jedoch ausgenützt, dass die Dokumente auf verschiedenen Hostrechnern respektive in unterschiedlichen Domänen des World Wide Web gespeichert sind, und es wird erfindungsgemäss eine Domäne und/oder ein Hostrechner als Knoten des Graphen dargestellt und jedes Dokumente jeweils einem Knoten zugeordnet. Eine Gruppe von Referenzen, welche Dokumente eines ersten Knotens mit Dokumenten eines zweiten Knotens verbinden, wird als Kante zwischen diesen beiden Knoten dargestellt.

Da ein Hostrechner und/oder eine Domäne üblicherweise einer Firma oder Institution zugeordnet ist, wird es möglich, einem Knoten, welcher eine Domäne oder einen Hostrechner repräsentiert, einer Körperschaft zuzuordnen und Beziehungen zwischen Körperschaften als Kanten zwischen den Knoten darzustellen. Ein Knoten fasst eine Mehrzahl von Dokumenten zusammen, und eine Kante fasst eine Mehrzahl von Referenzen zusammen. Dadurch wird eine relevante Information, nämlich ein Vorhandensein einer Beziehung zwischen zwei Körperschaften, auf das Wesentliche reduziert und in einer für einen Benutzer sinnvollen Art dargestellt.

In einer bevorzugten Variante der Erfindung wird bei einem Anwählen eines ersten Knotens durch den Benutzer eine automatisch ermittelte Liste von weiteren Knoten dargestellt, welche eine Referenz zum ersten Knoten aufweisen oder durch den ersten Knoten referenziert werden. Nach Massgabe einer Eingabe des Benutzers wird der Graph um einen oder mehrere dieser weiteren Knoten erweitert. Dies erlaubt dem Benutzer, den Graph gemäss seinen Interessen interaktiv aufzubauen.

In einer bevorzugten Variante der Erfindung wird bei einem Anwählen einer Kante angezeigt, auf welchen Referenzen die Kante beruht. Beispielsweise wird angezeigt, dass Dokument A der Firma X das Dokument V der Firma Y referenziert, oder es wird angezeigt, dass die Referenz auf einem Dokument des Informationsdienstes Q oder auf einer Benutzereingabe basiert.

In einer bevorzugten Variante der Erfindung wind bei der Anzeige einer Liste von Referenzen oder Knoten diese Liste nach vorgegebenen Kriterien gefiltert. Dadurch lassen sich Listeneinträge, welche beispielsweise vorgegebene Stopwörter enthalten oder durch den Benutzer als uninteressant markiert worden sind, eliminieren.

Weitere bevorzugte Ausführungsformen gehen aus den abhängigen Patentansprüchen hervor.

### Kurze Beschreibung der Zeichnungen

Im folgenden wird die Erfindung anhand eines bevorzugten Ausführungsbeispiels, welches in den beiliegenden Zeichnungen dargestellt ist, näher erläutert. Es zeigen:
- Figur 1: schematisch Fenster zur Darstellung von Informationen gemäss der Erfindung auf einem Computerbildschirm;
- Figur 2: einen Graph zur Darstellung einer Informationsstruktur;
- Figur 3: den Graph aus Figur 2 nach Verfeinerung der Darstellung eines Knotens; und
- Figuren 4 bis 6: schematisch verschiedene Varianten zur Beschaffung der gemäss der Erfindung dargestellten Informationen.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

Die folgenden Definitionen und Erklärungen liefern Hintergrundinformationen zum technischen Gebiet der vorliegenden Erfindung. Sie sollen das Verständnis der Erfindung und der bevorzugten Ausführungsformen erleichtern.

**Internet:** Das Internet ist eine Ansammlung von untereinander verbundenen öffentlichen und privaten Computernetzen, welche, aufbauend auf einem Satz von Standardprotokollen (wie TCP/IP, HTTP, ftp und Gopher), ein globales, verteiltes Netzwerk bilden.

**Dokument:** Ein Dokument ist eine Zusammenstellung von Daten, welche mit einem Anwendungsprogramm dargestellt und/oder bearbeitet werden kann und als selbständige Einheit erscheint und behandelt wird. Dokumente umfassen gewöhnlich Steuercodes, die spezifizieren, wie der Dokumentinhalt durch das Anwendungsprogramm angezeigt wird. Ein HTML-Dokument ist eine spezielle Art von Dokument, welche Codes in HTML (HyperText-Markup Language) enthält, und mit einem "Webbrowser"-Programm darstellbar ist. Ein HTML-Dokument, welches auf einer World Wide Web Site zugänglich ist, wird als ein "Webdokument" oder eine "Webseite" bezeichnet. Webdokumente können im allgemeinen eingebettete Komponenten umfassen, wie zum Beispiel GIF (Graphic Interchange Format) Dateien, wobei eine Referenz zu dem Bild eingebettet wird. Referenzen zu anderen Webseiten werden im HTML.Code als sogenannte URLs dargestellt, siehe "URL" weiter unten.

**Referenz, Hyperlink** oder Navigationslink: Eine Referenz, welche von einem Dokument zu einem anderen Dokument oder von einer Stelle eines Dokuments zu einem anderen Teil desselben Dokuments zeigt. Gewöhnlich wird ein Hyperlink als visuell hervorgehobener Text angezeigt, und nach Anklikken des Hyperlinks mittels eines Zeigegerätes wie einer Computermaus wird das entsprechende Dokument oder der entsprechende Dokumentteil dargestellt.

**Hypertextsystem:** Ein rechnergestütztes Informationssystem, in dem Dokumente (und andere Arten von Dateninstanzen) durch Hyperlinks verbunden sind, um ein benutzernavigierbares Netz von Dokumenten zu bilden. Dokumente und die Hyperlinks eines Hypertextsystems können auch nichttextuelle Informationen wie Bilder oder Audiosignale enthalten beziehungsweise referenzieren.

**World Wide Web** (auch "Web" oder "WWW"): Ein globales Hypertextsystem, basierend auf einem Satz von Standardprotokollen (wie HTTP und HTML), welches das Internet als Übertragungsweg benutzt. Ein Softwareprogramm, das Benutzern erlaubt, Dokumente des World Wide Web anzufordern und zu betrachten, wird als "Webbrowser" bezeichnet. Ein Programm, das auf solche Anfragen reagiert, indem es Webdokumente liefert, wird als "Webserver" bezeichnet.

**Website:** "Website" bezeichnet im Allgemeinen eine Datenbank oder eine andere Ansammlung von untereinander verbundenen Hypertextdokumenten und zugehöriger Dateninstanzen, die über ein Computernetz zugänglich ist. Je nach Zusammenhang werden damit auch die dazugehörigen Hardware-und/oder Softwareserver bezeichnet, welche benutzt werden, um einen Zugriff zu diesen Dokumenten zu ermöglichen.
Im Zusammenhang mit dem World Wide Web entspricht eine Website meist einem bestimmten Internet Domain Namen, wie "winzigweich.com" und umfasst Dokumente, welche durch eine bestimmte Organisation oder Körperschaft zur Verfügung gestellt werden oder sich auf diese beziehen.
Andere Arten Websites können, z.B., ein Hypertextsystem eines "Intranet" (d.h., ein internes Netz, welches Standardinternet-Protokolle verwendet) einer Firma sein, oder ein Hypertextsystem, das andere Dokumentenübertragungsprotokolle verwendet.

**URL** (Uniform Resource Locator): Eine eindeutige Adresse, die den Standort eines Dokuments im Internet vollständig spezifiziert. Wie jeweils aus dem Zusammenhang klar wird, wird die Bezeichnung "URL" manchmal auch verwendet, um das entsprechende Dokument selbst zu bezeichnen. Das allgemeine Format einer URL ist
protocol://machine-address/path/filename.
Dabei sind die einzelnen Komponenten:
- protocol:: ein verwendetes Datenüberttagungsprotokoll wie FTP (File Transfer Protocol), HTTP (HyperText Transmission Protocol) oder gopher.
- machine-address:: eine Bezeichnung eines Computers, auch FQDN (Fully Qualified Domain Name) genannt, dargestellt durch eine IP-Adresse oder Ziffernfolge wie 123.45.678.123 oder durch einem Namen wie computer.dom.tld. Dabei sind "dom" und "tid" sogenannte Domänennamen. Der Domänenname "tld", typischerweise ein Kürzel wie net, com, org etc. wird üblicherweise als "top level domain bezeichnet, der Domänenname "dom", typischerweise ein Name einer Firma oder Organisation, ist eine Sub- oder Unterdomäne von "tld" und wird auch als "second level domain" bezeichnet. Es ist auch eine weitere Hierarchiestufe mit einer weiteren Subdomäne möglich, wie in beispielsweise computer.dom1.dom2.tld. Der Namensteil "computer" bezeichnet einen Rechner oder Hostrechner. Optional enthält machine-address auch eine Bezeichnung eines Ports des Hostrechners, über den eine Kommunikation laufen soll.
- path:: ein Pfad zu einem Verzeichnis auf dem Hostrechner.
- filename:: ein Name einer Datei in diesem Verzeichnis.

**Graph:** Im Zusammenhang mit Datenbanksystemen bezeichnet der Begriff "Diagramm" oder "Graphstruktur" im Allgemeinen eine Datenstruktur, die als Menge verbundener Knotenpunkte dargestellt werden kann. Eine Website kann als Diagramm dargestellt werden, in dem jeder Knotenpunkt des Diagramms einem Dokument der Website entspricht und jede Verbindung zwischen zwei Knotenpunkten eine Referenz innerhalb der Website darstellt.

**TCP/IP** (Transmission Control Protocol/Internet Protocol): Ein Standardprotokoll, das spezifiziert, wie Computer Daten über das Internet austauschen. TCP/IP ist das Datenübertragungprotokoll auf der untersten Stufe der Standardinternet-Protokolle.

**Webcrawling:** Der Prozess des Zugreifens auf den Inhalt von Websites, der Verarbeitung und Zusammenfassung dieses Inhalts, im Allgemeinen durch ein automatisiertes Such- und Analyseprogramm. Webcrawling wird durch kommerzielle Internet-Suchmaschinen durchgeführt (wie Infoseek™ und Alta Vista™) welche einen Index von Begriffen erstellen, die innerhalb von Webseiten des World Wide Web erscheinen. Dadurch wird einem einzelnen Benutzer eine Suche nach Begriffen ermöglicht, welche im wesentlichen das gesamte Internet erfasst.

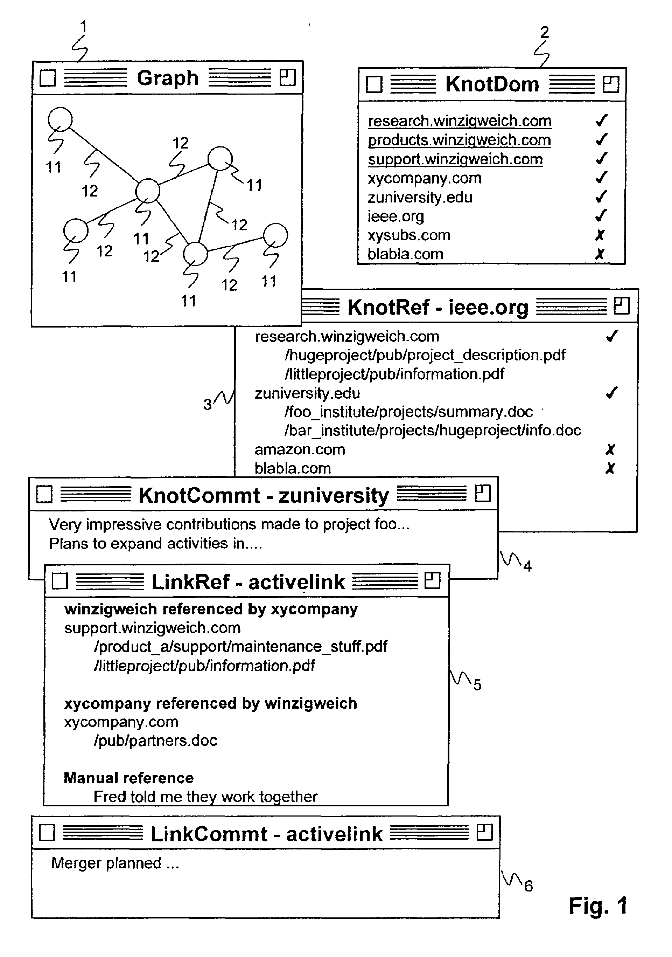

Figur 1 zeigt schematisch Fenster zur visuellen Darstellung von Informationen gemäss dem erfinderischen Verfahren auf einer Darstellungseinheit eines Computers oder Datenverarbeitungsgeräts. Die Darstellung stellt eine Informationsstruktur oder Referenzsstruktur von Dokumenten des World Wide Web in einer übersichtlichen und bearbeitbaren Weise dar. In einem ersten Fenster 1 ist ein Graph mit Knoten 11 und Kanten 12 dargestellt. Jeder Knoten 11 stellt eine Domäne und/oder einen Hostrechner einer Körperschaft dar, die für einen Benutzer von Interesse ist. Dokumente einer Website, die einer bestimmten Körperschaft zugeordnet ist, sind dem entsprechenden Knoten 11 zugeordnet. Jede Kante 12 verbindet zwei Knoten 11 und stellt eine oder mehrere Referenzen zwischen den entsprechenden Körperschaften dar. Diese Referenzen entsprechen typischerweise URLs, welche von Dokumenten einer ersten Körperschaft auf Dokumente einer zweiten Körperschaft verweisen oder umgekehrt. Eine indirekte Referenz kann aufgrund einer Information entstehen, welche von einer dritten Körperschaft her stammt. Eine solche dritte Körperschaft ist beispielsweise ein Informationsdienst mit Daten über Forschungsprojekte, Firmenbeteiligungen, Wirtschaftsnachrichten etc. Eine Referenz kann auch durch einen Benutzer manuell eingegeben werden, beispielsweise aufgrund von Informationen, die ihm aus anderen Informationsquellen vorliegen. Der Graph ist, wie weiter unten beschrieben wird, durch den Benutzer bearbeitbar.

Die Figur 1 zeigt ferner ein zweites Fenster 2 mit einer Liste mit Knotendomänen. Diese Liste 2 zeigt die Domänennamen und/oder Hostrechner welche den dargestellten Knoten entsprechen. Ein drittes Fenster 3 weist eine Liste 3 mit Knotenreferenzen auf, welche beim Auswählen oder Anklicken eines Knotens durch den Benutzer die Domänen respektive Knoten auflistet, welche durch den Knoten referenziert werden oder den Knoten referenzieren. Ein viertes Fenster 4 weist Kommentare zu Knoten auf, die vorzugsweise nach dem Auswählen eines Knotens 11 angezeigt werden und durch den Benutzer änderbar sind. Ein fünftes Fenster 5 weist eine Liste mit Kantenreferenzen auf, die beim Auswählen einer Kante 12 durch den Benutzer die Referenzen anzeigt, auf welchen die Kante 12 beruht. Ein sechstes Fenster 6 weist Anmerkungen zu Kanten 12 auf, die vorzugsweise nach dem Auswählen einer Kante 12 angezeigt werden und durch den Benutzer änderbar sind.

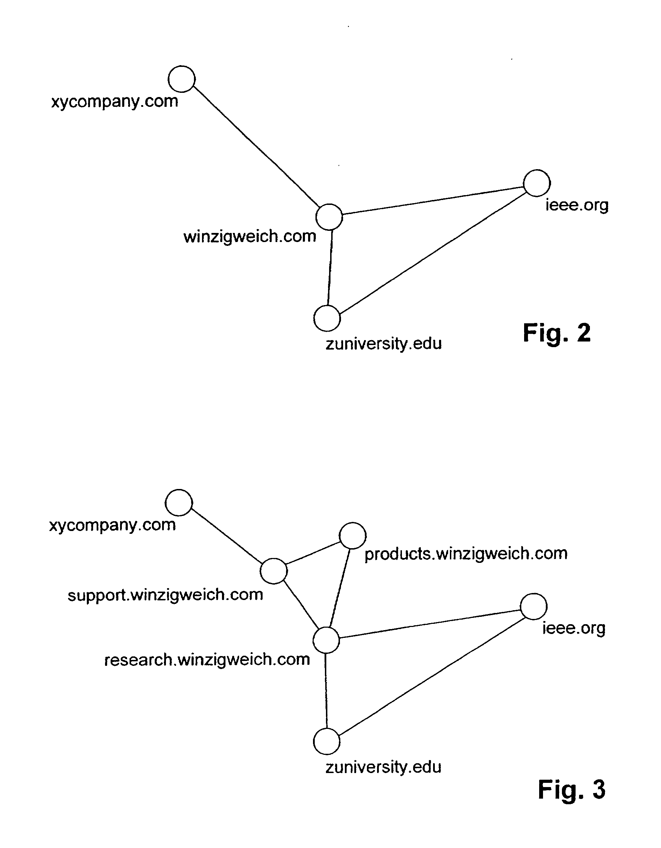

Figur 2 zeigt beispielhaft einen Graph zur Darstellung einer Informationsstruktur im ersten Fenster 1 gemäss der Erfindung. Dabei sind die Bezugszeichen weggelassen und dafür Domänennamen zur Bezeichnung der einzelnen Knoten eingetragen. Die Darstellung zeigt, dass eine Domäne winzigweich.com Referenzen zu Domänen xycompany.com, zunversity.edu und ieee.org aufweist oder von diesen referenziert wird, und dass die Domänen ieee.org und zuniversity.edu ebenfalls Referenzen zueinander aufweisen. Die Domänen repräsentieren jeweils die Firmen Winzigweich und Xycompany, die Universität Zuniversity und den Fachverband IEEE (Institute of Electrical and Electronics Engineers).

Die Liste 2 der Knotendomänen zeigt in diesem Fall beispielsweise die Domänen- respektive Hostnamen research.winzigweich.com, products.winzigweich.com, support.winzigweich.com, xycompany.com, zunversity.edu und ieee.org. Die Liste 2 weist unter Umständen auch Domänennamen auf, die in einer Suche gefunden wurden aber aufgrund einer Benutzereingabe nicht im Graph dargestellt sind, da beispielsweise kein Interesse an einer bestimmten Tochterfirma Xysubs von Xycompany besteht. In einer bevorzugten Variante der Erfindung wird bei einer Auswahl eines Knotens 11 durch einen Benutzer ein Teil der Liste 2 mit Domänen und Hostrechnern, welche dem Knoten zugeordnet sind dargestellt oder visuell hervorgehoben. Beispielsweise werden beim Anklicken des Knotens winzigweich.com die Einträge research.winzigweich.com, products.winzigweich.com und support.winzigweich.com in der Liste 2 der Domänen unterstrichen oder farbig dargestellt.

Die Liste 3 mit Knotenreferenzen zeigt bei einer Auswahl eines ersten Knotens 11 diejenigen Knoten 11, deren Dokumente eine Referenz zu Dokumenten des ersten Knotens 11 aufweisen (und umgekehrt) oder zu denen eine indirekte oder eine manuelle Referenz besteht. Vorzugsweise ist diese Liste 3 hierarchisch und dynamisch aufgebaut, so dass beispielsweise durch Auswählen eines referenzierten Knotens aus der Liste die entsprechenden einzelnen Referenzen angezeigt werden. Die Liste 3 der Knotenreferenzen weist auch Knoten auf, die nicht im Graph dargestellt sind und beispielsweise durch eine Suche im World Wide Web ermittelt worden sind.

In einer bevorzugten Variante der Erfindung wird nach Massgabe einer Auswahl eines nicht im Graphen dargestellten Knotens aus der Liste 3 der Knotenreferenzen durch den Benutzer dieser ausgewählte Knoten im Graphen neu dargestellt. Dabei werden auch Kanten 12 zu den bereits dargestellten Knoten 11 nach Massgabe eines Vorhandenseins von Referenzen zwischen dem neu ausgewählten Knoten 11 und den bereits dargestellten Knoten 11 neu dargestellt. Beispielsweise wird auf diese Weise, falls doch Interesse an der oben erwähnten Tochterfirma Xysubs besteht, ein entsprechender Knoten 11 mit Kanten 12 im Graph 1 erzeugt. Auf diese Weise ist auch ein ganzer Graph, ausgehend von einer einzigen Körperschaft, erzeugbar.

In einer bevorzugten Variante der Erfindung wird bei einer Auswahl einer Kante 12 durch den Benutzer, wobei die Kante 12 einen ersten Knoten 11 mit einem zweiten Knoten 11 verbindet, dem Benutzer die Liste 5 von Kantenreferenzen dargestellt, welche Dokumente des ersten Knotens 11 mit Dokumenten des zweiten Knotens 11 verbinden. Diese Referenzen zeigen entweder vom ersten zum zweiten oder vom zweiten zum ersten Knoten 11 oder sind indirekte oder aufgrund einer Benutzereingabe erzeugte Referenzen. Indirekte Referenzen werden anhand von Informationen aus Dokumenten erzeugt, welche weder dem ersten Knoten 11 noch dem zweiten Knoten 11 zugeordnet sind. Beispielsweise enthält ein Pressedienst einen Hinweis auf eine bevorstehende Fusion oder eine Forschungszusammenarbeit zwischen den Firmen Xycompany und Winzigweich. Dies führt zu einem entsprechenden Eintrag in der Liste 5 der Kantenreferenzen zwischen den entsprechenden Domänen respektive Knoten 11.

In einer bevorzugten Variante der Erfindung werden die Liste 3 von Knotenreferenzen und/oder die Liste 5 von Kantenreferenzen aufgrund vorgegebener automatischer oder vom Benutzer vorgegebenen Kriterien gefiltert. Beispielsweise werden Referenzen zu amazon.com ignoriert, falls kein Interesse an Buchhandel besteht, oder es werden Domänen respektive Hostrechner, zu denen nur vereinzelte Referenzen bestehen, ignoriert. In einer weiteren Variante sind Referenzen auch von Hand eliminierbar.

In einer bevorzugten Variante der Erfindung werden bei einer Auswahl eines Knotens 11 oder einer Kante 12 durch den Benutzer dem Benutzer Kommentarinformationen 4,6 zum Knoten 11 respektive zur Kante 12 editierbar dargestellt.

In einer bevorzugten Variante der Erfindung wird nach Massgabe einer Benutzereingabe ein ausgewählter Knoten 11 aufgespalten und als mehrere Knoten 11 dargestellt. Figur 3 zeigt den Graph aus Figur 2 in einer verfeinerten Darstellung des Knotens winzigweich.com. Dieser Knoten ist in drei neue Knoten research.winzigweich.com, products.winzigweich.com und support.winzigweich.com aufgespalten. Die verfeinerte Darstellung offenbart beispielsweise, dass xycompany.com Beziehungen zu support.winzigweich.com aufweist, und dass products.winzigweich.com keine Beziehungen nach aussen aufweist. Dadurch sind Schwerpunkte von Beziehungen zwischen Körperschaften besser durchschaubar und liefern mehr Information. Umgekehrt sind gemäss der Erfindung nach Massgabe einer Benutzereingabe auch mehrere Knoten 11 zusammenfassbar und als ein Knoten 11 darstellbar.

In einer weiteren bevorzugten Variante der Erfindung werden Kanten 12 und/oder Knoten 11 nach Massgabe von vorgegebenen Kriterien wie einer Anzahl oder Wichtigkeit von Referenzen oder Domänen dargestellt. Beispielsweise wird eine Kante 12 je nach Anzahl der entsprechenden Referenzen dicker oder dünner gezeichnet. Oder es werden verschiedene Farben zum Einfärben von Kanten 12 verwendet, um beispielsweise vom Benutzer erfasste Bedeutungen der entsprechenden Beziehung anzuzeigen. Solche Bedeutungen sind z.B. "Konkurrent", "Beteiligung", "Zusammenarbeit", "Auftraggeber".

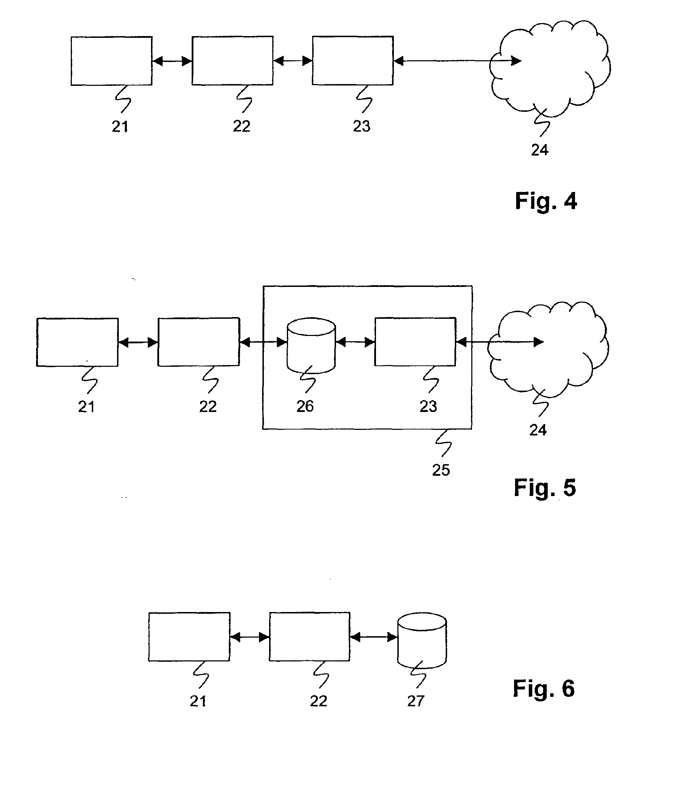

Figuren 4 bis 6zeigen schematisch verschiedenen Varianten zur Beschaffung der gemäss der Erfindung dargestellten Informationen. Figur 4 zeigt eine erste Konfiguration, in welcher ein Clientrechner oder Client 21 dem Benutzer eine Darstellung des Graphen 1 und der Informationen der weiteren Fenster 2,3,4,5,6 anzeigt. Die Darstellung wird in einem Serverrechner oder Server 22 aufbereitet, anhand von Informationen, welche die Referenzen zwischen den interessierenden Domänen respektive Körperschaften repräsentieren. Diese Informationen werden durch einen Webcrawler 23 ermittelt, welcher das World Wide Web 24 systematisch durchsucht. Dabei wird von einer oder mehreren Domänen ausgegangen für die Interesse besteht, und die Suche vorzugsweise in einer vorgegebenen Distanz von diesen Domänen abgebrochen. Der Begriff "Distanz" bezeichnet dabei eine Anzahl von Referenzen, welche ein Dokument über Zwischendokumente indirekt mit einem anderen Dokument verbinden.

Figur 5 zeigt eine zweite Konfiguration, in welcher kein eigener Webcrawler 23 eingesetzt ist, sondern eine bestehende Suchmaschine 25 mit einem Webcrawler 23 und einem Speicher 26 verwendet wird. Solche Suchmaschinen sind beispielsweise unter den Namen AltaVista™, Yahoo!™, Lycos™ etc. bekannt. Dadurch, dass auf bereits indexierte Daten in einer Datenbank respektive im Speicher 26 der Suchmaschine 25 zurückgegriffen wird, entfällt der Aufwand zum Durchsuchen des World Wide Web.

Figur 6 zeigt eine dritte Konfiguration, welche einen Speicher oder eine eigene Datenbank zur Speicherung von Analysedaten 27 aufweist. Die Analysedaten 27 enthalten relevante Informationen zu vorgegebenen Domänen und ihren Beziehungen, also Informationen, die im erfindungsgemässen Verfahren ermittelt und dargestellt werden. Die Informationen werden wie oben beschrieben entweder durch einen eigenen Webcrawler 23 oder durch eine bestehende Suchmaschine 25 ermittelt. In dieser Weise kann beispielsweise ein Informationdienst zur Konkurrenzanalyse betrieben werden. Dabei werden die Analysedaten 27 regelmässig mit Bezug auf einen bestimmten Wirtschaftsbereich aktualisiert. Die Analysedaten 27 werden für Analysen für verschiedene Kunden des Informationsdienstes verwendet.

Das erfinderische Verfahren wird durch ein Computerprogramm, das in einen Speicher eines digitalen Computers ladbar ist, bei einer Ausführung des Programms auf diesem Computer ausgeführt. Das Computerprogramm ist auf einem Computerprogrammprodukt mit einem computerlesbaren Speichermedium gespeichert.

Das erfinderische Verfahren erlaubt somit, anhand von systematisch aus dem World Wide Web ermittelten Informationen und anhand von Interaktionen mit dem Benutzer eine Übersicht über Beziehungen zwischen Körperschaften oder Organisationen, beispielsweise für eine Konkurrenzanalyse zu gewinnen

### Bezugszeichenliste

- 1: erstes Fenster, Graph
- 2: zweites Fenster, Liste mit Knotendomänen
- 3: drittes Fenster, Liste mit Knotenreferenzen
- 4: viertes Fenster, Kommentare zu Knoten
- 5: fünftes Fenster, Liste mit Kantenreferenzen
- 6: sechstes Fenster, Anmerkungen zu Kanten
- 11: Knoten
- 12: Kante
- 21: Client
- 22: Server
- 23: Webcrawler
- 24: World Wide Web, WWW
- 25: Suchmaschine
- 26: Speicher
- 27: Analysedaten

## Patentansprüche

1. Verfahren zur visuellen Darstellung einer Informationsstruktur von mehreren Dokumenten des "World Wide Web" durch einen Graphen, welcher Knoten (11) und Kanten (12) aufweist, wobei der Graph auf einem Bildschirm eines Computers dargestellt wird, wobei diese Dokumente auf mehreren Hostrechnern des World Wide Web gespeichert sind, **dadurch gekennzeichnet,**
**dass** Domänen und/oder Hostrechner als Knoten (11) des Graphen dargestellt werden und jedes Dokument jeweils einem Knoten (11) zugordnet wird, und
**dass** eine Gruppe von Referenzen, welche Dokumente eines ersten Knotens (11) mit Dokumenten eines zweiten Knotens (11) verbinden, als Kante (12) zwischen diesen beiden Knoten (11) dargestellt wird.

2. Verfahren gemäss Anspruch 1, **dadurch gekennzeichnet, dass** bei einer Auswahl eines Knotens (11) durch einen Benutzer eine Liste (2) von Domänen und Hostrechnern dargestellt wird, welche dem Knoten zugeordnet sind.

3. Verfahren gemäss Anspruch 1, **dadurch gekennzeichnet, dass** bei einer Auswahl eines ersten Knotens (11) durch einen Benutzer dem Benutzer eine Liste (3) von weiteren Knoten (11) dargestellt wird, welche eine Referenz zum ersten Knoten aufweisen oder durch den ersten Knoten (11) referenziert werden.

4. Verfahren gemäss Anspruch 3, **dadurch gekennzeichnet, dass** nach Massgabe einer Auswahl eines nicht im Graphen dargestellten Knotens aus der Liste (3) der weiteren Knoten (11) durch den Benutzer dieser ausgewählte Knoten (11) im Graphen dargestellt wird und Kanten zu den bereits dargestellten Knoten (11) nach Massgabe eines Vorhandenseins von Referenzen zwischen dem ausgewählten Knoten (11) und den bereits dargestellten Knoten (11) Kanten (12) dargestellt werden.

5. Verfahren gemäss Anspruch 3, **dadurch gekennzeichnet, dass** die Liste (3) von weiteren Knoten (11) aufgrund vorgegebener Kriterien gefiltert wird.

6. Verfahren gemäss Anspruch 1, **dadurch gekennzeichnet, dass** bei einer Auswahl einer Kante (12) durch einen Benutzer, wobei die Kante (12) einen ersten Knoten (11) mit einem zweiten Knoten (11) verbindet, dem Benutzer eine Liste (5) von Kantenreferenzen dargestellt wird, welche Dokumente des ersten Knotens (11) mit Dokumenten des zweiten Knotens (11) verbinden.

7. Verfahren gemäss Anspruch 6, **dadurch gekennzeichnet, dass** mindestens eine der Referenzen aus der Liste (5) von Kantenreferenzen aufgrund einer Benutzereingabe oder aufgrund von Informationen aus Dokumenten, welche weder dem ersten Knoten (11) noch dem zweiten Knoten (11) zugeordnet sind, erzeugt wird.

8. Verfahren gemäss Anspruch 6, **dadurch gekennzeichnet, dass** die Liste (5) von Kantenreferenzen aufgrund vorgegebener Kriterien gefiltert wird.

9. Verfahren gemäss Anspruch 1, **dadurch gekennzeichnet, dass** bei einer Auswahl eines Knotens (11) oder einer Kante (12) durch einen Benutzer dem Benutzer Kommentarinformation (4,6) zum Knoten (11) respektive zur Kante (12) editierbar dargestellt wird.

10. Verfahren gemäss Anspruch 1, **dadurch gekennzeichnet, dass** nach Massgabe einer Benutzereingabe mehrere Knoten (11) zusammengefasst und als ein Knoten (11) dargestellt werden.

11. Verfahren gemäss Anspruch 1, **dadurch gekennzeichnet, dass** nach Massgabe einer Benutzereingabe ein ausgewählter Knoten (11) aufgespalten und als mehrere Knoten (11) dargestellt wird.

12. Verfahren gemäss Anspruch 1, **dadurch gekennzeichnet, dass** Informationen zur Darstellung des Graphen bei Bedarf durch eine Suche welche von betrachteten Domänen respektive Hostrechnern ausgeht, mittels eines eigenen Webcrawlers (23) oder durch eine Suche über mindestens eine bestehende Suchmaschine (25), oder mittels einer eigenen Datenbank (26), welche Relationen der betrachteten Domänen respektive Hostrechner speichert, geschieht.

13. Computerprogramm, das in einen Speicher eines Computers ladbar ist und bei einer Ausführung auf diesem Computer das Verfahren gemäss Anspruch 1 ausführt.

14. Computerprogrammprodukt mit einem computerlesbaren Speichermedium, auf welchem das Computerprogramm gemäss Anspruch 13 gespeichert ist.
